Europäisches Patentamt

**European Patent Office**

**Office européen des brevets**

(11) Veröffentlichungsnummer: **0 108 249**
**B1**

(19)

(12) **EUROPÄISCHE PATENTSCHRIFT**

(45) Veröffentlichungstag der Patentschrift:
**12.03.86**

(51) Int. Cl.⁴: **C 04 B 11/26,** B 01 D 53/34

(21) Anmeldenummer: **83109888.4**

(22) Anmeldetag: **04.10.83**

(54) Verfahren zum Trocknen von feuchtem Gips, insbesondere Gips aus einer nasschemischen Rauchgasentschwefelungsanlage und Vorrichtung zur Durchführung des Verfahrens.

(30) Priorität: **09.10.82 DE 3237474**

(43) Veröffentlichungstag der Anmeldung:
**16.05.84 Patentblatt 84/20**

(45) Bekanntmachung des Hinweises auf die Patenterteilung:
**12.03.86 Patentblatt 86/11**

(84) Benannte Vertragsstaaten:
**AT DE GB NL**

(56) Entgegenhaltungen:
**DE - A - 2 727 544**
**DE - A - 2 931 599**
**DE - A - 3 119 422**

**Patent Abstracts of Japan, Band 2, Nr. 105, 30. August 1978, Seite 1905 C 78**

(73) Patentinhaber: **STEAG AG,**
**Bismarckstrasse 54 Postfach 10 37 62,**
**D-4300 Essen 1 (DE)**
Patentinhaber: **Knauf Engineering GmbH, P.O. Box,**
**D-8715 Iphofen (DE)**

(72) Erfinder: **Hannes, Klaus, Dr. Ing., Lenbachstrasse 6 a,**
**D-5628 Heiligenhaus (DE)**
Erfinder: **Weiler, Helmut, Ing. grad., Hofer Heide 31,**
**D-5620 Velbert 1 (DE)**

## Beschreibung

Die Erfindung betrifft ein Verfahren zum Trocknen von feuchtem Gips, insbesondere Gips aus einer nasschemischen Rauchgasentschwefelungsanlage, mittels Rauchgasen von Feuerungsanlagen, insbesondere von Kohlekraftwerken, bei denen zwischen der Luft, die der Feuerungsanlage zumindest zu einem Teil als Verbrennungsluft zugeführt wird, und den aus der Feuerungsanlage austretenden Rauchgasen Wärme getauscht wird.

Bei Kohlekraftwerken ist dem Kessel ein Wärmetauscher, z. B. ein Drehwärmetauscher, nachgeschaltet, um mittels der aus dem Kessel austretenden heissen Rauchgase die für die Verbrennung und für das Trocknen der Kohle in dem Kessel vorgeschalteten Kohlemühlen erforderliche Luft zu erwärmen. Die neueren Kraftwerke sind in vielen Fällen mit nasschemischen Rauchgasentschwefelungsanlagen versehen. Der aus einer solchen Rauchgasentschwefelungsanlage austretende Gips muss häufig einer Trocknung unterzogen werden, um dessen Weiterverarbeitung und/oder Transport zu ermöglichen. Zwischen dem Wärmetauscher und der Rauchgasentschwefelungsanlage ist üblicherweise ein Staubfilter, z. B. in Form eines Elektrofilters, eingeschaltet. Um den aus der Rauchgasentschwefelungsanlage herausgeführten Gips zu trocknen, wird in der Praxis ein Teil des entstaubten heissen Rauchgasstromes vor der Rauchgasentschwefelungsanlage abgezweigt und dem Trockner zugeführt.

Bei dieser Verfahrensführung besteht die Gefahr, dass in dem noch nicht entschwefelten Rohgasstrom vorhandene Verunreinigungen, wie Chloride, im Trockner an die Gipsteilchen gebunden werden, d. h. der Gips wird während des Trocknens in nicht gewünschter Weise verunreinigt. Ähnliche Probleme der Rauchgasentschwefelung und Trocknung treten auch bei anderen Industrieanlagen, wie Müllverbrennungsanlagen mit sehr hohen Chloridgehalten in den Abgasen, Sinteranlagen, Glashütten, Phosphorsäurefabriken und dgl., auf. Auch ist es denkbar, dass feuchter feinteiliger Naturgips mit Hilfe der in den Rauchgasen von Feuerungsanlagen vorhandenen Abwärme getrocknet werden soll.

Es ist die Aufgabe der vorliegenden Erfindung, ein Verfahren der im Oberbegriff des vorstehenden Anspruches 1 genannten Art anzugeben, bei dem der Gips zwar mit der in den Rauchgasen vorhandenen Wärme getrocknet wird, jedoch im Rauchgas vorhandene und im getrockneten Gips nicht erwünschte Komponenten während des Trocknungsvorganges nicht in den Gips eingetragen werden.

Diese Aufgabe wird dadurch gelöst, dass der feuchte Gips mit warmer Trocknungsluft getrocknet wird, die durch Wärmetausch mit den Rauchgasen der Feuerungsanlage erwärmt wird.

Auf diese Weise ist sichergestellt, dass unerwünschte Komponenten, wie die Chloride, nicht in den Gips eingetragen werden.

Falls der Wärmetausch zu einer für den Trocknungsvorgang nicht erforderlichen Erwärmung der Trocknungsluft führen würde, ist es möglich, dass die erwärmte Trocknungsluft vor dem Inberührungbringen mit dem feuchten Gips mit nicht erwärmter Luft vermischt wird.

Nach Abgabe mindestens eines Teils ihrer Wärme kann die Trocknungsluft vom Gips abgetrennt und in die Atmosphäre entlassen werden; hier dürfte in den meisten Fällen aber ein gesonderter Feinstaubfilter erforderlich sein.

Hinsichtlich der Wirtschaftlichkeit des Verfahrens ist es jedoch von Vorteil, wenn die Trocknungsluft nach Abgabe mindestens eines Teils ihrer Wärme von dem Gips abgetrennt und der Feuerungsanlage zugeführt wird. Damit kann erreicht werden, dass die vorhandene Restwärme benutzt und dass der der Feuerungsanlage nachgeschaltete Staubfilter für die Trockenluftentstaubung mitgenutzt werden kann.

Vom energetischen Standpunkt her gesehen erscheint es sinnvoll, vorzugsweise die abgetrennte Trocknungsluft direkt der Feuerung des Kessels zuzuführen.

Um eine Entstaubung zu erreichen, ist es auch sinnvoll, die Trocknungsluft zwischen Feuerungsanlage und einer im Wege der Rauchgase angeordneten Entstaubungseinrichtung einzuspeisen. Diese Entstaubungseinrichtung kann z. B. der der Feuerungsanlage nachgeschaltete Staubfilter selbst oder eine trocken- oder nasschemische Rauchgasentschwefelungsanlage sein. Die letztere Möglichkeit bietet sich z. B. in solchen Fällen an, in denen das Rauchgasentschwefelungsprodukt z. B. in der Zementindustrie eingesetzt werden kann. In diesen Fällen muss die Trocknungsluft nicht fein entstaubt worden sein, sondern es kann relativ grob entstaubte Trocknungsluft in den Weg der Rauchgase eingespeist werden.

Im Falle eines Kohlekraftwerks mit mindestens einer Kohlemühle wird ein Teil der erwärmten Luft direkt der Verbrennung zugeführt, während ein anderer Teil als Trocknungsluft der Kohlemühle zugeführt wird. Falls beim Einsatz besonders feuchter Kohle der von den Rauchgasen auf die Luft übertragene Wärmeinhalt nicht mehr ausreicht, um dem Trockner hinreichend erwärmte Trocknungsluft zuzuführen, kann es sinnvoll sein, dass die durch den Wärmetausch mit den Rauchgasen erwärmte Trocknungsluft vor dem Inberührungbringen mit dem feuchten Gips mittels Wärmetausch mit Dampf weiter erwärmt wird, der mit Hilfe der Feuerungsanlage erzeugt wird, z. B. Turbinenentnahmedampf.

Obwohl das Verfahren auch zum Trocknen anderer Chemiegipse eingesetzt werden kann, treten die erfindungsgemässen Vorteile des Verfahrens besonders deutlich hervor, wenn die Rauchgase der Feuerungsanlage in einer nasschemischen Rauchgasentschwefelungsanlage entschwefelt und der aus der Rauchgasentschwefelungsanlage abgezogene nasse Gips mit der Trocknungsluft getrocknet wird.

Die Erfindung ist auch auf eine Vorrichtung zur Durchführung des Verfahrens gerichtet und geht aus von einer Vorrichtung mit einer Feuerungsanlage, einem mit feuchtem Gips beschickbaren und mit warmem Gas betreibbaren Trockner und einem der Feuerungsanlage verbrennungsluftseitig vorgeschalteten und rauchgasseitig nachgeschalteten Wärmetauscher, insbesondere Drehluftvorwärmer.

Erfindungsgemäss ist bei dieser Vorrichtung vorgesehen, dass der Auslass des Wärmetauschers für die erwärmte Luft mit dem Warmgaseingang des Trockners verbunden ist.

Vorzugsweise ist dem Trockner ein Separator nachgeschaltet, in dem der getrocknete Gips von der Trocknungsluft getrennt wird.

Um die Trocknungsluft nach dem Trennen nicht ohne Ausnutzung der Restwärme in die Atmosphäre entlassen zu müssen, ist der Trocknungsluftausgang des Separators mit der Feuerungsanlage verbunden; die Verbindung kann vorzugsweise direkt mit der Feuerung oder zwischen Feuerung und Staubfilter erfolgen.

Die Erfindung soll nun anhand der beigefügten Figuren am Beispiel eines Kohlekraftwerks näher erläutert werden.

Kohle K wird einer Kohlemühle 1 zugeführt und aus dieser über eine Förderleitung 2 in die Feuerung eines Kessels 3 eingebracht. Die Rauchgase R verlassen den Kessel über einen Kanal 4, der sie zu einem Drehluftvorwärmer 5 (Luvo) führt. (Andere Wärmetauscherbauarten können hier eingesetzt werden.) Das abgekühlte Rauchgas wird über einen Kanal 6 einem Elektrofilter 7 zugeleitet. Das entstaubte Rauchgas wird über einen Kanal 7a einer nasschemischen Rauchgasentschwefelungsanlage 8 zugeführt. Beispiele für derartige nasschemische Rauchgasentschwefelungsanlagen finden sich auf S. 724 und 725 des „Jahrbuch der Dampferzeugungstechnik" (1980-1981), Vulkan-Verlag, Essen.

Neben den zu entschwefelnden Rauchgasen wird der Rauchgasentschwefelungsanlage 8 über eine Leitung 9 ein Waschmittel, z. B. eine Kalksuspension oder eine Kalk-HCl-Lösung zugeführt. Der in der Rauchgasentschwefelungsanlage 8 erzeugte Gips wird über eine Leitung 10 in einen Trockner 11 eingebracht, in dem der feuchte Gips mittels über Leitung 12 zugeführter Warmluft GL getrocknet werden kann. Als Trockner eignet sich z. B. die aus der DE-PS Nr. 2155240 bekannte Vorrichtung; eine andere bevorzugte Möglichkeit für den Trockner sind die an sich bekannten Flugschichttrockner.

Die für den Betrieb der Feuerungsanlage bestehend aus einer oder mehreren Kohlemühlen 1 und einem diesen nachgeschaltete Kessel 3 erforderliche Verbrennungs- und Trocknungsluft wird über ein Druckgebläse 13 und einen Kanal 14 an den Drehluftvorwärmer 5 herangeführt und die erwärmte Luft wird über einen Kanal 15 und Zweigleitungen 15a und 15b dem Kessel 3 als Verbrennungsluft VL bzw. der Mühle 1 als Kohletrocknungsluft KL zugeführt.

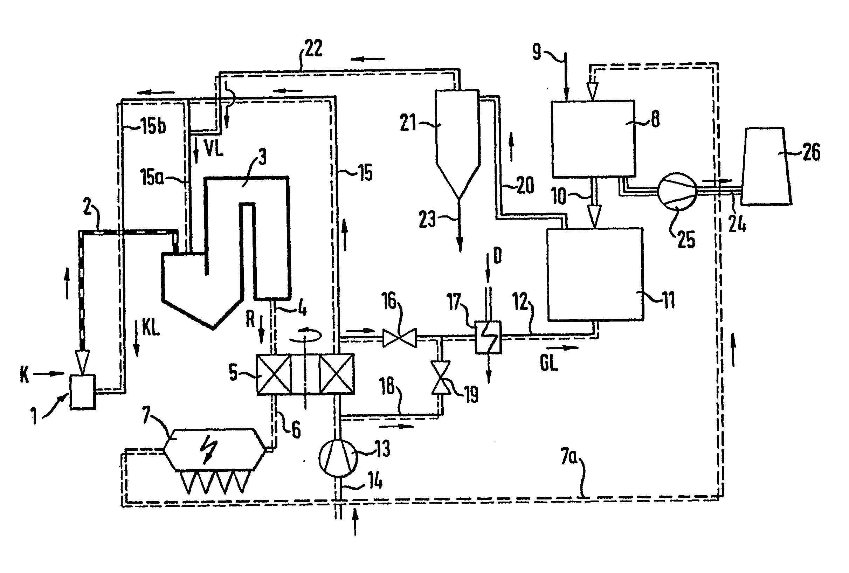

Der von dem Luvo 5 fortführende Kanal 15 ist mit dem Kanal 12 verbunden. In den Kanal 12 sind eine Klappe 16 und ein mit Dampf D beaufschlagbarer Wärmetauscher 17 angeordnet. Der Wärmetauscher 17 kann mit Dampf des Kessels 3 beaufschlagt werden. Der Übersichtlichkeit halber sind die entsprechenden Dampfleitungen in der Figur fortgelassen worden.

Der Kanal 14 ist mit dem Kanal 12 verbunden, wobei der Verbindungspunkt zwischen der Klappe 16 und dem Wärmetauscher 17 liegt. In der Verbindungsleitung 18 selbst ist eine Klappe 19 angeordnet.

Der getrocknete Gips und die Trocknungsluft GL werden über einen Kanal 20 aus dem Trockner 11 abgezogen und einem Separator 21 zugeleitet, der vorzugsweise als Zyklon ausgebildet ist. Die Abluft des Separators 21 wird über einen Kanal 22 in die Zweigleitung 15a eingespeist. Im Bereich der Verzweigung der beiden Zweigleitungen 15a und 15b und im Bereich der Einspeisung des Kanals 22 in den Kanal 15a können zur Einstellung der Strömungsquerschnitte Ventile bzw. Klappen angeordnet sein. Diese sind der Einfachheit halber nicht mitdargestellt.

Aus dem Separator 21 wird über eine Leitung 23 das Endprodukt, d. h. der getrocknete Gips, abgezogen. Das entschwefelte Rauchgas wird mittels eines Kanals 24, in dem ein Saugzuggebläse 25 angeordnete ist, einem Kamin 26 zugeführt.

Bei Betrieb der in der Figur gezeigten Vorrichtung können die Verhältnisse so ausgelegt sein, dass bei Betrieb der Feuerungsanlage mit einer Kohle bestimmten Feuchtigkeitsgehalts ein Teil der erwärmten Luft im Kanal 15 über Kanal 12 abgezogen werden kann und der Trocknung im Trockner 11 dienen kann. Sollte der Feuchtigkeitsgehalt der Kohle absinken, kann der Anteil an Trocknungsluft KL erniedrigt und an Trocknungsluft GL erhöht werden.

Bei besonders feuchter Kohle kann es erforderlich sein, dass kurzfristig der Wärmetauscher 17 in Betrieb gehen muss, um die Temperatur der über Kanal 12 dem Trockner zugeführten Luft GL auf Trocknungstemperatur zu erhöhen. (Diesem Wärmetauscher kann ein Bypass zugeordnet sein, um Luft GL bei Nichtbetrieb des Wärmetauschers um diesen herumzuführen.) Dies kann der Erwärmung der aus dem Kanal 15 abgezweigten Luft und/oder der über Kanal 18 herangeführten Luft dienen. Mit Hilfe der Ventile 16 und 19 können die Mengen an Luft eingestellt werden. Falls die Rauchgaswärme zur Aufwärmung der Trocknungsluft nicht zur Verfügung steht, wird die Trocknungsluft GL für den Gips ausschliesslich mittels Dampf D erwärmt.

Natürlich können auch bei Nichtbetrieb des Wärmetauschers 17 Luftmengeneinstellungen mit Hilfe der Ventile 16 und 19 erfolgen.

Bei einem Schwefelgehalt von 1,3% in der Kohle und einem Feuchtigkeitsgehalt von 10% in der Kohle und einem durch Trocknen auszutreibenden Wassergehalt von 10% im Gips verhalten sich die beim Mahlen aus der Kohle auszutreibende Wassermenge und die beim Trocknen aus dem Gips auszutreibende Wassermenge ungefähr wie 10:1, so dass sich die Luftmenge GL im Kanal 12 und die Luftmenge KL im Kanal 15b entsprechend verhalten. Somit kann die für das Trocknen des Gipses erforderliche erwärmte Luftmenge GL in den meisten Fällen aus dem Kanal 15 ohne Schwierigkeiten für den Betrieb des Kraftwerks abgezweigt oder Reserven des Gebläses 14 und des Luvo's 5 genutzt werden.

**Patentansprüche**

1. Verfahren zum Trocknen von feuchtem Gips, insbesondere Gips aus einer nasschemischen Rauchgasentschwefelungsanlage, mittels Rauchgasen von Feuerungsanlagen, insbesondere von Kohlekraftwerken, bei denen zwischen der Luft, die der Feuerungsanlage zumindest zu einem Teil als Verbrennungsluft zugeführt wird, und den aus der Feuerungsanlage austretenden Rauchgasen Wärme getauscht wird, dadurch gekennzeichnet, dass der feuchte Gips mit warmer Trocknungsluft getrocknet wird, die durch Wärmetausch mit den Rauchgasen der Feuerungsanlage erwärmt wird.

2. Verfahren nach Anspruch 1, dadurch gekennzeichnet, dass die erwärmte Trocknungsluft vor dem Inberührungbringen mit dem feuchten Gips mit nicht erwärmter Luft vermischt wird.

3. Verfahren nach Anspruch 1 oder 2, dadurch gekennzeichnet, dass nach Abgabe mindestens eines Teils ihrer Wärme die Trocknungsluft von dem Gips abgetrennt und in die Atmosphäre entlassen wird.

4. Verfahren nach Anspruch 1 oder 2, dadurch gekennzeichnet, dass die Trocknungsluft nach Abgabe mindestens eines Teils ihrer Wärme von dem Gips abgetrennt und der Feuerungsanlage zugeführt wird.

5. Verfahren nach Anspruch 4, dadurch gekennzeichnet, dass die abgetrennte Trocknungsluft direkt der Feuerung des Kessels zugeführt wird.

6. Verfahren nach Anspruch 4, dadurch gekennzeichnet, dass die Trocknungsluft zwischen Feuerungsanlage und einer im Weg der Rauchgase angeordneten Entstaubungseinrichtung eingespeist wird.

7. Verfahren nach einem der Ansprüche 1 bis 6, dadurch gekennzeichnet, dass die durch den Wärmetausch mit den Rauchgasen erwärmte Trocknungsluft vor dem Inberührungbringen mit dem feuchten Gips mittels Wärmetausch mit Dampf weitererwärmt wird, der mit Hilfe der Feuerungsanlage erzeugt wird.

8. Verfahren nach einem der Ansprüche 1 bis 7, dadurch gekennzeichnet, dass die Rauchgase der Feuerungsanlage in einer nasschemischen Rauchgasentschwefelungsanlage entschwefelt werden und der aus der Rauchgasentschwefelungsanlage abgezogene nasse Gips mit der Trocknungsluft getrocknet wird.

9. Vorrichtung zur Durchführung des Verfahrens nach einem der Ansprüche 1 bis 8 mit einer Feuerungsanlage, einem mit feuchtem Gips beschickbaren und mit warmem Gas betreibbaren Trockner und einem der Feuerungsanlage verbrennungsluftseitig vorgeschalteten und rauchgasseitig nachgeschalteten Wärmetauscher, insbesondere Drehluftvorwärmer, dadurch gekennzeichnet, dass der Auslass (15) des Wärmetauschers (5) für die erwärmte Luft mit dem Warmgaseingang (12) des Trockners (11) verbunden ist.

10. Vorrichtung nach Anspruch 9, dadurch gekennzeichnet, dass dem Trockner (11) ein Separator (21) nachgeschaltet ist, in dem der getrocknete Gips (23) von der Trocknungsluft (22) getrennt wird.

11. Vorrichtung nach Anspruch 10, dadurch gekennzeichnet, dass der Trocknungsluftausgang (22) des Separators mit der Feuerungsanlage (1, 3) verbunden ist.

**Claims**

1. A process for drying moist gypsum, in particular gypsum from a wet-chemical flue-gas desulphurisation unit, by means of flue gas from a furnace installation, in particular of a coal-fired power station, wherein heat is exchanged between the air, which at least in part is fed as combustion air to the furnace installation, and the flue gas issuing from the furnace installation, characterised in that the moist gypsum is dried with hot drying air which is heated by heat exchange with the flue gas of the furnace installation.

2. A process according to Claim 1, characterised in that the heated drying air is mixed with unheated air before it is contacted with the moist gypsum.

3. A process according to Claim 1 or 2, characterised in that the drying air is separated from the gypsum after it has given at least a part of its heat and is discharged into the atmosphere.

4. A process according to Claim 1 or 2, characterised in that the drying air is separated from the gypsum after it has given up at least a part of its heat and is fed to the furnace installation.

5. A process according to Claim 4, characterised in that the drying air which has been separated off is fed directly to the boiler furnace.

6. A process according to Claim 4, characterised in that the drying air is fed in between the furnace installation and a dust precipitation device located in the path of the flue gas.

7. A process according to any one of Claims 1 to 6, characterised in that the drying air, which has been heated by the heat exchange with flue gases, is further heated, before it is contacted with the moist gypsum, by means of heat exchange with steam generated by means of the furnace installation.

8. A process according to any one of Claims 1 to 7, characterised in that the flue gas of the furnace installation is desulphurised in a wet-chemical flue-gas desulphurisation unit and the wet gypsum taken off from the flue gas desulphurisation unit is dried by means of the drying air.

9. Apparatus for carrying out the process according to any one of Claims 1 to 8, comprising a furnace installation, a dryer which can be charged with moist gypsum and can be run with hot gas, and a heat exchanger arranged upstream of the furnace installation on the combustion air side and arranged downstream on the flue gas side, in particular a rotary air preheater, characterised in that the outlet (15) of the heat exchanger (5) for the heated air is connected to the hot gas inlet (12) for the dryer (11).

10. Apparatus according to Claim 9, characterised in that a separator (21) is provided downstream of the dryer (11), in which separator the dried gypsum (23) is separated from the drying air (22).

11. Apparatus according to Claim 10, characterised in that the drying air outlet (22) of the separator is connected to the furnace installation (1, 3).

## Revendications

1. Procédé de séchage de gypse humide, en particulier de gypse provenant d'une installation de désulfurisation chimique par voie humide de gaz brûlés, au moyen de gaz brûlés d'installations de chauffe, en particulier de centrales électriques au charbon, dans lesquelles, entre l'air qui alimente au moins pour partie, en tant qu'air de combustion, l'installation de chauffe et les gaz brûlés se dégageant de l'installation de chauffe, il se produit des échanges thermiques, caractérisé en ce que le gypse humide est séché avec de l'air de séchage chaud qui est chauffé par les échanges thermiques se produisant avec les gaz brûlés de l'installation de chauffe.

2. Procédé conforme à la revendication 1, caractérisé en ce que l'air de séchage chauffé est mélangé à de l'air non chauffé avant d'être mis en contact avec le gypse humide.

3. Procédé selon l'une des revendications 1 ou 2, caractérisé en ce que, après avoir cédé au moins une partie de sa chaleur, l'air de séchage est séparé du gypse et relâché dans l'atmosphère.

4. Procédé selon l'une des revendications 1 ou 2, caractérisé en ce que l'air de séchage, après avoir cédé au moins une partie de sa chaleur, est séparé du gypse et ramené à l'installation de chauffe.

5. Procédé selon la revendication 4, caractérisé en ce que l'air de séchage, une fois séparé du gypse, est amené directement au foyer de la chaudière.

6. Procédé selon la revendication 4, caractérisé en ce que l'air de séchage est introduit entre l'installation de chauffe et une installation de dépoussiérage aménagée sur le trajet des gaz brûlés.

7. Procédé selon l'une des revendications 1 à 6, caractérisé en ce que l'air de séchage chauffé par les échanges thermiques se produisant avec les gaz brûlés continue à être chauffé, avant d'être mis en contact avec le gypse humide, au moyen d'échanges thermiques se produisant avec de la vapeur produite à l'aide de l'installation de chauffe.

8. Procédé selon l'une des revendications 1 à 7, caractérisé en ce que les gaz brûlés de l'installation de chauffe sont désulfurisés chimiquement par voie humide dans une installation de désulfurisation de gaz brûlés et que le gypse humide extrait de ladite installation de désulfurisation est séché avec l'air de séchage.

9. Dispositif pour la mise en œuvre du procédé selon l'une des revendications 1 à 8, comportant une installation de chauffe, un séchoir pouvant être chargé de gypse humide et fonctionnant au gaz chaud et un échangeur thermique connecté du côté de l'air de combustion en amont de l'installation de chauffe et en aval du côté des gaz brûlés, ledit échangeur thermique étant en particulier un préchauffeur à air tournant, caractérisé en ce que l'échappement (15) de l'échangeur thermique (5) pour l'air chauffé est connecté à l'entrée des gaz chauds (12) du séchoir (11).

10. Dispositif selon la revendication 9, caractérisé en ce qu'en aval du séchoir (11) est connecté un séparateur (21) dans lequel le gypse séché (23) est séparé de l'air de séchage (22).

11. Dispositif selon la revendication 10, caractérisé en ce que l'échappement d'air de séchage (22) du séparateur est connecté à l'installation de chauffe (1, 3).